# EUROPEAN PATENT APPLICATION

(11) **EP 4 760 509 A1**
(43) Date of publication of application: **17.06.2026**
(21) Application number: 25202265.2
(22) Date of filing: 15.09.2025
(51) Int. Cl.: G06F 11/07, G06F 11/34, G06N 20/00

(54) **METHOD AND SYSTEM FOR ENABLING TICKETLESS IT ENVIRONMENT**

(30) Priority: 13.12.2024 IN 202421098845
(71) Applicant: Tata Consultancy Services Limited, Maharashtra (IN)
(72) Inventor: SAMUDRALA, Satya Narayana, 411006 Pune, Maharashtra (IN); NATU, Maitreya, 411028 Pune, Maharashtra (IN); GORE, Surabhi, 411028 Pune, Maharashtra (IN); SHETE, Priyanka, 411057 Pune, Maharashtra (IN)
(74) Representative: Goddar, Heinz J.

(57) **Abstract**

Embodiments herein provide a method and system for an information technology (IT) service management using AIOps. The system integrates diverse data sources, such as events, logs, metrics, health checks, change requests, and traces into a centralized platform. This enables the system to create detailed blueprints of IT entities, using dependency data to improve issue analysis. The system employs advanced algorithms, including deep learning and predictive models, to analyze the collected data and identify a wide range of anomalies, that include univariate, multivariate, and complex anomalies. Additionally, the system includes a Human-in-the-Loop (HITL) mechanism that allows users to provide feedback and contribute to problem resolution, ensuring that the system continuously learns and adapts. This proactive approach not only predicts and prevents potential issues but also empowers users with automated resolution tools, reducing dependency on service desks. Overall, the system transforms IT operations by making them more proactive, integrated, and user centric.

## Description

### CROSS-REFERENCE TO RELATED APPLICATIONS AND PRIORITY

The present application claims priority from Indian application no. 202421098845, filed on December 13, 2024.

### TECHNICAL FIELD

The disclosure herein generally relates to the field of an artificial intelligence for information technology (IT) operations (AIOps), and more particularly, a method and system for an information technology (IT) service management by proactively identifying abnormalities using an artificial intelligence for IT operations (AIOps) and recommending fixes.

### BACKGROUND

Traditional IT service management relies heavily on manual ticketing processes that require significant human intervention, leading to high operational costs and inefficiencies. The dependency on reactive ticket-based workflows often results in delayed identification and resolution of IT issues, causing prolonged system downtimes and negatively impacting business operations.

The current technology landscape in IT operations management primarily focuses on reactive approaches to problem resolution, relying on traditional SLA and ticketing systems. The gaps include lack of unified data integration, lack of proactive capabilities, inability to bring humans in the loop and lack of comprehensive techniques. Fragmented tools and siloes data make it difficult to think overall picture.

### SUMMARY

Embodiments of the present disclosure present technological improvements as solutions to one or more of the above-mentioned technical problems recognized by the inventors in conventional systems. For example, in one embodiment, a method for an information technology (IT) service management by proactively identifying abnormalities using an artificial intelligence for IT operations (AIOps) and recommending fixes is provided. The processor-implemented method includes collecting, via an Input/Output (I/O) interface, a plurality of data associated to one or more operations of information technology (IT) management from one or more predefined sources, analyzing the collected plurality of data to create one or more blueprints of entities within the IT management based on a data dependency, and designing a behaviour profiling based on the created one or more blueprints of entities within the IT management to determine a baseline pattern of operation for the collected plurality of data.

Further, the processor-implemented method includes identifying one or more anomalies from the one or more metrics and the one or more logs based on the behaviour profiling using a pre-trained machine learning (ML) model, deriving an elimination signature and a prediction signature from the received one or more recurring historical events using a predefined statistical technique for one or more actionable resolution steps for elimination and prevention of one or more recurring events, analyzing the received one or more historical events using a predefined optimization technique to identify a set of faults of entities for determining a frequency of faults and recommending a monitoring frequency to the users to detect occurrence of future events using reinforcement learning (RL) model and one or more actionable steps to prevent the detected occurrence of future events using an Artificial Intelligence for IT Operations (AIOps).

In another embodiment, a system for an information technology (IT) service management by proactively identifying abnormalities using AIOps and recommending fixes is provided. The system comprises a memory storing a plurality of instructions, one or more Input/Output (I/O) interfaces, and one or more hardware processors coupled to the memory via the one or more I/O interfaces. The one or more hardware processors are configured by the instructions to collect, via an Input/Output (I/O) interface, a plurality of data associated to one or more operations of information technology (IT) management from one or more predefined sources, analyze the collected plurality of data to create one or more blueprints of entities within the IT management based on a data dependency and design a behaviour profiling based on the created one or more blueprints of entities within the IT management to determine a baseline pattern of operation for the collected plurality of data.

The one or more hardware processors are configured by the instructions to identify one or more anomalies from the one or more metrics and the one or more logs based on the behaviour profiling using a pre-trained machine learning (ML) model, derive an elimination signature and a prediction signature from the received one or more recurring historical events using a predefined statistical technique for one or more actionable resolution steps for elimination and prevention of one or more recurring events, analyze the received one or more historical events using a predefined optimization technique to identify a set of faults of entities for determining a frequency of faults and recommend a monitoring frequency to the users to detect occurrence of future events using reinforcement learning (RL) model and one or more actionable steps to prevent the detected occurrence of future events using an Artificial Intelligence for IT Operations (AIOps).

In yet another aspect, there are provided one or more non-transitory machine-readable information storage mediums comprising one or more instructions, which when executed by one or more hardware processors causes a method for an information technology (IT) service management by proactively identifying abnormalities using AIOps and recommending fixes is provided. The processor-implemented method includes collecting, via an Input/Output (I/O) interface, a plurality of data associated to one or more operations of information technology (IT) management from one or more predefined sources, analyzing the collected plurality of data to create one or more blueprints of entities within the IT management based on a data dependency, and designing a behaviour profiling based on the created one or more blueprints of entities within the IT management to determine a baseline pattern of operation for the collected plurality of data.

Further, the processor-implemented method includes identifying one or more anomalies from the one or more metrics and the one or more logs based on the behaviour profiling using a pre-trained machine learning (ML) model, deriving an elimination signature and a prediction signature from the received one or more recurring historical events using a predefined statistical technique for one or more actionable resolution steps for elimination and prevention of one or more recurring events, analyzing the received one or more historical events using a predefined optimization technique to identify a set of faults of entities for determining a frequency of faults and recommending a monitoring frequency to the users to detect occurrence of future events using reinforcement learning (RL) model and one or more actionable steps to prevent the detected occurrence of future events using an Artificial Intelligence for IT Operations (AIOps).

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of a system for an information technology (IT) service management using artificial intelligence for IT operations (AIOps), according to some embodiments of the present disclosure.
FIG. 2 is a functional block diagram illustrating the system of FIG. 1 for an information technology (IT) service management using AIOps, according to some embodiments of the present disclosure.
FIG. 3A and 3B is an exemplary flow diagram illustrating a processor-implemented method for an information technology (IT) service management using AIOps, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Traditional Information Technology (IT) service management relies heavily on manual ticketing processes that require significant human intervention, leading to high operational costs and inefficiencies. The dependency on reactive ticket-based workflows often results in delayed identification and resolution of IT issues, causing prolonged system downtimes and negatively impacting business operations.

So, there is a need to addresses critical technology gaps in IT operations management by integrating diverse data sources, such as events, logs, metrics, health checks, change requests, and traces into a centralized platform. This enables the system to create detailed blueprints of IT entities, using dependency data to improve issue analysis. The method and system disclosed herein overcomes this by creating a centralized platform for IT service management using advanced algorithms, including deep learning and predictive models, to analyze this data and identify a wide range of anomalies, that include univariate, multivariate, and complex anomalies. It includes a Human-in-the-Loop (HITL) mechanism that allows users to provide feedback and contribute to problem resolution, ensuring that the system continuously learns and adapts. This proactive approach not only predicts and prevents potential issues but also empowers users with automated resolution tools, reducing dependency on service desks.

Embodiments herein provide a method and system for an information technology (IT) service management using artificial intelligence for IT operations (AIOps). Herein, the method and system prioritize the elimination of recurring issues by mining problem signatures across logs, events, and metrics. The disclosure emphasizes the generation of problem signatures using machine learning techniques, which allows the system to identify and resolve root causes, preventing issues from recurring rather than simply automating responses. Further, the system incorporates a unified framework that leverages temporal, association, and correlation mining. This ensures comprehensive predictions across diverse scenarios, capturing patterns that might be missed by singular methods. A health-check engine uses reinforcement learning to adjust monitoring routines in real-time, ensuring that faults are identified and resolved before escalating into larger problems. This adaptive method goes beyond the static predictive maintenance models of the existing solutions.

The disclosure enhances user interaction through intelligent dialogues and explainable AI insights, creating a system that learns from user feedback and adapts its conversations to continuously and overtime reduces the dependency on human experts. This deeper engagement ensures trust and more effective resolution compared to the basic chatbots and incident management approaches. In terms of resolution, while the prior arts relied on historical data to derive resolutions, the disclosure herein goes further by integrating a Human-in-the-Loop (HIL) approach. This allows the system to gather valuable insights and resolutions directly from human experts during the problem-solving process. These resolutions are not only documented but also stored to enhance future problem elimination and prevention efforts. By incorporating real-time feedback and adaptive learning, the system ensures that the solution continuously improves, ultimately leading to a more effective and trustworthy IT service management experience.

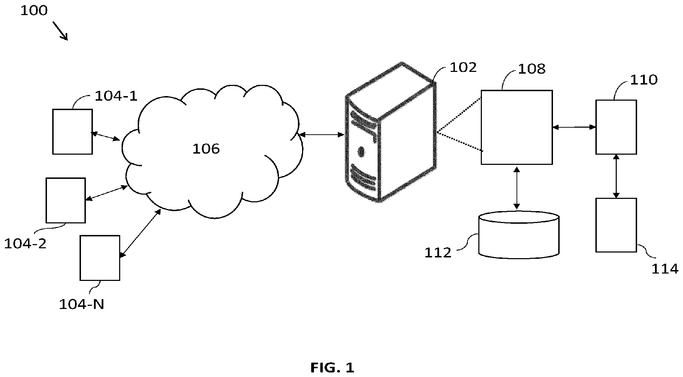

Referring now to the drawings, and more particularly to FIG. 1 through FIG. 3B, where similar reference characters denote corresponding features consistently throughout the figures, there are shown preferred embodiments, and these embodiments are described in the context of the following exemplary system and/or method.

FIG. 1 illustrates a block diagram of a system 100 for an information technology (IT) service management using artificial intelligence for IT operations (AIOps), according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH^{®}, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

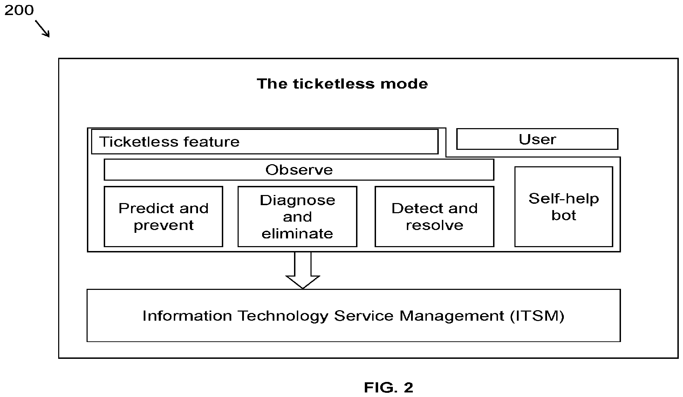

FIG. 2 is a functional block diagram 200 to illustrate the system 100 for an information technology (IT) service management using AIOps, according to some embodiments of the present disclosure. In one embodiment, the system 100 is configured for integrating diverse data sources, such as events, logs, metrics, health checks, change requests, and traces into a centralized platform. This enables the system to create detailed blueprints of IT entities, using dependency data to improve issue analysis. The system employs advanced techniques, including deep learning and predictive models, to analyze the collected data and identify a wide range of anomalies, that include univariate, multivariate, and complex anomalies. Additionally, the system includes a Human-in-the-Loop (HITL) mechanism that allows users to provide feedback and contribute to problem resolution, ensuring that the system continuously learns and adapts. This proactive approach not only predicts and prevents potential issues but also empowers users with automated resolution tools, reducing dependency on service desks. Overall, the system transforms IT operations by making them more proactive, integrated, and user centric.

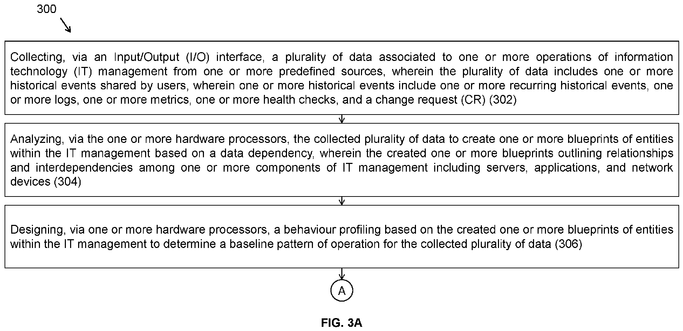

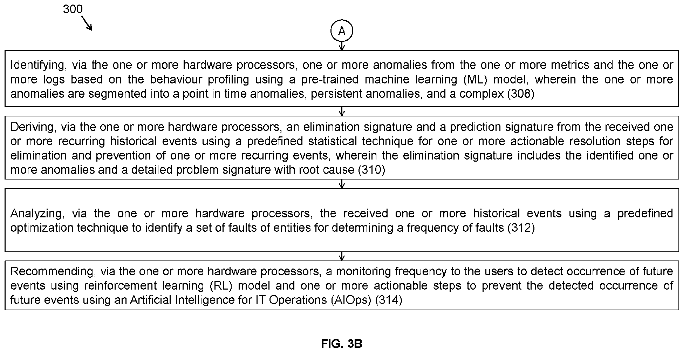

FIG. 3A and 3B is a flow diagram illustrating a processor-implemented method 300 for an information technology (IT) service management using AIOps implemented by the system 100 of FIG. 1, in accordance with an embodiment of the present disclosure. Functions of the components of the system 100 are now explained through steps of flow diagram in FIG. 3A and 3B, according to some embodiments of the present disclosure. In the method and system for an information technology (IT) service management using AIOps.

Initially, at step 302 of the processor-implemented method 300, the one or more hardware processors 108 are configured by the programmed instructions to collect a plurality of data associated to one or more operations of information technology (IT) management from one or more predefined sources. The plurality of data includes one or more historical events shared by users. The one or more historical events include one or more recurring events, one or more logs, one or more metrics, one or more health checks, and a change request (CR). This diverse data collection enables a holistic view of the IT environment, allowing for more accurate analysis and decision-making.

At the next step 304 of the processor-implemented method 300, the one or more hardware processors 108 are configured by the programmed instructions to analyze the collected plurality of data to create one or more blueprints of entities within the IT management based on a data dependency. The one or more blueprints outlining relationships and interdependencies among one or more components of IT management including servers, applications, and network devices. Additionally, the system 100 can derive dependencies using historical data, identifying patterns and connections that may not be explicitly documented by using a predefined process mining technique. This capability ensures that the system understands the complex interactions within the IT infrastructure, enabling more accurate problem identification and impact analysis.

At the next step 306 of the processor-implemented method 300, the one or more hardware processors 108 are configured by the programmed instructions to design a behaviour profiling based on the created one or more blueprints of entities within the IT management to determine a baseline pattern of operation for the collected plurality of data.

At the next step 308 of the processor-implemented method 300, the one or more hardware processors 108 are configured by the programmed instructions to identify one or more anomalies from the one or more metrics and the one or more logs based on the behaviour profiling using a pre-trained machine learning (ML) model. The one or more anomalies are segmented into a point in time anomalies (univariate and multivariate), persistent anomalies, and a complex. By analyzing data across all entities, the system performs normal behavior profiling, establishing baseline patterns of operation for each component. This profiling is critical for detecting a wide variety of anomalies, which are categorized into four main types:
I. **Univariate Point-in-Time Anomalies:** These anomalies occur at a specific moment and involve a single metric or entity.
II. **Univariate Span-of-Time Anomalies:** These are anomalies that develop over a period, involving a sustained deviation in a single metric or entity.
III. **Multivariate Anomalies:** These involve multiple metrics or entities, where the relationship between them deviates from the norm.
IV. **Complex Anomalies:** These are any type of anomalies that are observed on a group or related entities, which require special attention or deeper analysis.

At the next step 310 of the processor-implemented method 300, the one or more hardware processors 108 are configured by the programmed instructions to derive an elimination signature and a prediction signature from the received one or more recurring historical events using a predefined statistical technique for one or more actionable resolution steps for elimination and prevention of one or more recurring events. The predefined statistical techniques such as a Frequent Pattern (FP) Growth to determine frequently co-occurring events, and a clustering technique that is performed on time of those events to identify the persistently occurring events.

The elimination signature includes the identified one or more anomalies and a detailed problem signature with root cause. To enhance accuracy and effectiveness, a Human-in-the-Loop (HITL) component is integrated, allowing users to provide feedback on derived signatures and suggest fixes. The prediction signature comprises of a detailed predictability information the one or more recurring events. The predictability information includes preventive steps to prevent occurrence of future events. The predictability information is at least one of (1) a temporal pattern based, (2) a frequency based, (3) a pre-conditional based and a combination thereof. The HITL mechanism is also utilized here to gather preventive steps from users, which are then incorporated into the system's predictive models. The elimination signature and the prediction signature may contain one or more anomalies. For example, an application failure is a recurring event, and signature says that around 20 mins before an anomaly was observed (could be any type) in Exchange Queue and around 40 mins before actual cause (could be an anomaly or other event) of this event has happened.

Further, the system is equipped with detailed signature creation capabilities, which correlate tickets with health check anomalies. This allows the system to identify the minimum number of health checks needed and the optimal frequency of those checks to detect a specific problem. Additionally, the HITL component helps in automating the resolution of these issues by involving users in refining and validating the system's recommendations.

At the next step 312 of the processor-implemented method 300, the one or more hardware processors 108 are configured by the programmed instructions to analyze the received one or more historical events using a predefined optimization technique to identify a set of faults of entities for determining a frequency of faults. The system 100 features an augmented intelligence engine that facilitates user interaction through conversational interfaces. The augmented intelligence engine assists users in resolving issues by providing guided troubleshooting and learning from user inputs during the conversation. As users interact with the system 100, it continually refines its knowledge base, improving its ability to provide accurate and effective resolutions without requiring service desk intervention.

Finally, at the last step 314 of the processor-implemented method 300, the one or more hardware processors 108 are configured by the programmed instructions to recommend a monitoring frequency to the users to detect occurrence of future events using reinforcement learning (RL) model and one or more actionable steps to prevent the detected occurrence of future events using an Artificial Intelligence for IT Operations (AIOps). The RL uses real time metrics/logs/events data or anomaly data to adjust the monitoring frequencies. For example, consider a central processing unit (CPU) utilization is identified as the right fault to detect the system slowdowns issues. Based on the historical data analysis, the existing solution recommends monitoring CPU utilization every 30 mins. However, through reinforcement learning technique, the system 100 adapts the monitoring frequency in real-time, such as, if the system 100 identifies that the CPU spikes are frequently occurring during business hours (say 2 PM to 5 PM). The system 100 dynamically adjusts the monitoring frequency every 5 minutes during these peak hours, similarly the system 100 relaxes the monitoring frequency if the CPU does not show any abnormalities.

By combining proactive problem identification, predictive analytics, human collaboration, and automated resolution, the engine significantly reduces the reliance on traditional ticketing systems. This leads to faster issue resolution, improved system uptime, and a more user-centric IT experience.

In another aspect, the system 100 is configured to resolve the one or more events in real time using a pre-trained augmented Intelligence model. The pre-trained augmented Intelligence model extracts one or more resolution steps from historical events data or by interacting with an identified expert. Further, the pre-trained augmented model comprises of a large language model (LLM) for analysis.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of unified data integration, lack of proactive capabilities, inability to bring humans in the loop and lack of comprehensive techniques for IT operation management. Embodiments herein provide a method and system for an information technology (IT) service management using AIOps. The system integrates diverse data sources, such as events, logs, metrics, health checks, change requests, and traces into a centralized platform. This enables the system to create detailed blueprints of IT entities, using dependency data to improve issue analysis. The system employs advanced algorithms, including deep learning and predictive models, to analyze the collected data and identify a wide range of anomalies, that include univariate, multivariate, and complex anomalies. Additionally, the system includes a Human-in-the-Loop (HITL) mechanism that allows users to provide feedback and contribute to problem resolution, ensuring that the system continuously learns and adapts. This proactive approach not only predicts and prevents potential issues but also empowers users with automated resolution tools, reducing dependency on service desks. Overall, the system transforms IT operations by making them more proactive, integrated, and user centric.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) comprising:
collecting (302), via an Input/Output (I/O) interface, a plurality of data associated to one or more operations of information technology (IT) management from one or more predefined sources, wherein the plurality of data includes one or more historical events shared by users, wherein one or more historical events include one or more recurring historical events, one or more logs, one or more metrics, one or more health checks, and a change request (CR);
analyzing (304), via one or more hardware processors, the collected plurality of data to create one or more blueprints of entities within the IT management based on a data dependency, wherein the created one or more blueprints outlining relationships and interdependencies among one or more components of IT management including servers, applications, and network devices;
designing (306), via the one or more hardware processors, a behaviour profiling based on the created one or more blueprints of entities within the IT management to determine a baseline pattern of operation for the collected plurality of data;
identifying (308), via the one or more hardware processors, one or more anomalies from the one or more metrics and the one or more logs based on the behaviour profiling using a pre-trained machine learning (ML) model, wherein the one or more anomalies are segmented into a point in time anomalies, persistent anomalies, and a complex;
deriving (310), via the one or more hardware processors, an elimination signature and a prediction signature from the received one or more recurring historical events using a predefined statistical technique for one or more actionable resolution steps for elimination and prevention of one or more recurring events, wherein the elimination signature includes the identified one or more anomalies and a detailed problem signature with root cause;
analyzing (312), via the one or more hardware processors, the received one or more historical events using a predefined optimization technique to identify a set of faults of entities for determining a frequency of faults; and
recommending (314), via the one or more hardware processors, a monitoring frequency to the users to detect occurrence of future events using reinforcement learning (RL) model and one or more actionable steps to prevent the detected occurrence of future events using an Artificial Intelligence for IT Operations (AIOps).

2. The process-implemented method (300) of claim 1, wherein comprising:
resolving the one or more events in real time using a pre-trained augmented Intelligence model, wherein the pre-trained augmented Intelligence model extracts one or more resolution steps from historical events data or by interacting with an identified expert, wherein the pre-trained augmented model comprises of a large language model (LLM) for analysis.

3. The process-implemented method (300) of claim 1, wherein the prediction signature includes a detailed predictability information of the one or more recurring events.

4. The process-implemented method (300) of claim 1, wherein the predictability information is at least one of (1) a temporal pattern based, (2) a frequency based, (3) a pre-conditional based and a combination thereof.

5. The process-implemented method (300) of claim 1, wherein the predictability information includes one or more preventive steps to prevent occurrence of future events.

6. A system (100) comprising:
a memory (110) storing instructions;
one or more Input/Output (I/O) interfaces (104); and
one or more hardware processors (108) coupled to the memory (110) via the one or more I/O interfaces (104), wherein the one or more hardware processors (108) are configured by the instructions to:
collect a plurality of data associated to one or more operations of information technology (IT) management from one or more predefined sources, wherein the plurality of data includes one or more historical events shared by users, wherein one or more historical events include one or more recurring historical events, one or more logs, one or more metrics, one or more health checks, and a change request (CR);
analyze the collected plurality of data to create one or more blueprints of entities within the IT management based on a data dependency, wherein the created one or more blueprints outlining relationships and interdependencies among one or more components of IT management including servers, applications, and network devices;
design a behaviour profiling based on the created one or more blueprints of entities within the IT management to determine a baseline pattern of operation for the collected plurality of data;
identify one or more anomalies from the one or more metrics and the one or more logs based on the behaviour profiling using a pre-trained machine learning (ML) model, wherein the one or more anomalies are segmented into a point in time anomalies (univariate and multivariate), persistent anomalies, and a complex;
derive an elimination signature and a prediction signature from the received one or more recurring historical events using a predefined statistical technique for one or more actionable resolution steps for elimination and prevention of one or more recurring events, wherein the elimination signature includes the identified one or more anomalies and a detailed problem signature with root cause;
analyze the received one or more historical events using a predefined optimization technique to identify a set of faults of entities for determining frequency of faults; and
recommend a monitoring frequency to the users to detect occurrence of future events using reinforcement learning (RL) model and one or more actionable steps to prevent the detected occurrence of future events using an Artificial Intelligence for IT Operations (AIOps).

7. The system (100) of claim 6, comprising:
resolving the one or more events in real time using a pre-trained augmented Intelligence model, wherein the pre-trained augmented Intelligence model extracts one or more resolution steps from historical events data or by interacting with an identified expert, wherein the pre-trained augmented model comprises of a large language model (LLM) for analysis.

8. The system (100) of claim 6, wherein the prediction signature includes a detailed predictability information of the one or more recurring events.

9. The system (100) of claim 6, wherein the predictability information is at least one of (1) a temporal pattern based, (2) a frequency based, (3) a pre-conditional based and a combination thereof.

10. The system (100) of claim 6, wherein the predictability information includes one or more preventive steps to prevent occurrence of future events.

11. One or more non-transitory machine-readable information storage mediums comprising one or more instructions which when executed by one or more hardware processors cause:
collecting, via an Input/Output (I/O) interface, a plurality of data associated to one or more operations of information technology (IT) management from one or more predefined sources, wherein the plurality of data includes one or more historical events shared by users, wherein one or more historical events include one or more recurring historical events, one or more logs, one or more metrics, one or more health checks, and a change request (CR);
analyzing the collected plurality of data to create one or more blueprints of entities within the IT management based on a data dependency, wherein the created one or more blueprints outlining relationships and interdependencies among one or more components of IT management including servers, applications, and network devices;
designing a behaviour profiling based on the created one or more blueprints of entities within the IT management to determine a baseline pattern of operation for the collected plurality of data;
identifying one or more anomalies from the one or more metrics and the one or more logs based on the behaviour profiling using a pre-trained machine learning (ML) model, wherein the one or more anomalies are segmented into a point in time anomalies, persistent anomalies, and a complex;
deriving an elimination signature and a prediction signature from the received one or more recurring historical events using a predefined statistical technique for one or more actionable resolution steps for elimination and prevention of one or more recurring events, wherein the elimination signature includes the identified one or more anomalies and a detailed problem signature with root cause;
analyzing the received one or more historical events using a predefined optimization technique to identify a set of faults of entities for determining a frequency of faults; and
recommending a monitoring frequency to the users to detect occurrence of future events using reinforcement learning (RL) model and one or more actionable steps to prevent the detected occurrence of future events using an Artificial Intelligence for IT Operations (AIOps).

12. The one or more non-transitory machine readable information storage mediums as claimed in claim 11, wherein comprising:
resolving the one or more events in real time using a pre-trained augmented Intelligence model, wherein the pre-trained augmented Intelligence model extracts one or more resolution steps from historical events data or by interacting with an identified expert, wherein the pre-trained augmented model comprises of a large language model (LLM) for analysis.

13. The one or more non-transitory machine readable information storage mediums as claimed in claim 11, wherein the prediction signature includes a detailed predictability information of the one or more recurring events.

14. The one or more non-transitory machine readable information storage mediums as claimed in claim 11, wherein the predictability information is at least one of (1) a temporal pattern based, (2) a frequency based, (3) a pre-conditional based and a combination thereof.

15. The one or more non-transitory machine readable information storage mediums as claimed in claim 11, wherein the predictability information includes one or more preventive steps to prevent occurrence of future events.
